# EUROPEAN PATENT SPECIFICATION

(11) **EP 2 305 778 B1**
(45) Date of publication and mention of the grant of the patent: **07.12.2016**
(21) Application number: 10179216.6
(22) Date of filing: 24.09.2010
(51) Int. Cl.: C10G 47/04, C10G 47/06, C10G 47/10, C10L 1/02, C10L 1/14, C10L 1/16, C10L 1/183, C10L 1/188, C10L 1/19, C10L 1/223, C10L 10/08, C10G 3/00

(54) **Fuel and fuel additives capable for use for internal combustion engines and process for the production thereof**
Treibstoffe und Treibstoffzusatzstoffe für Verbrennungsmotoren und Verfahren zur deren Herstellung
Carburants et additifs pour carburant pour moteurs à combustion interne et leur préparation

(30) Priority: 30.09.2009 HU 0900623; 27.11.2009 HU 0900739
(43) Date of publication of application: 06.04.2011
(60) Divisional application: 13171966.8
(73) Proprietor: MOL Magyar Olaj- és Gázipari Nyrt., 1117 Budapest (HU); OLAJTERV Févállakozó és Tervezö Zrt., 1036 Budapest (HU); Pannon Egyetem, 8200 Veszprém (HU); Magyar Tudományos Akadémia Kémiai Kutatóközpont, 1025 Budapest (HU)
(72) Inventor: Thernesz, Artur, 2000, Szentendre (HU); Boda, László, 2440, Százhalombatta (HU); Petró, József, 2440, Százhalombatta (HU); Leveles, László, 2440, Százhalombatta (HU); Wáhlné Horváth, Ilona, 2440, Százhalombatta (HU); Szalmásné Pécsvári, Gabriella, 2440, Százhalombatta (HU); Kelemen, Béla, 1222, Budapest (HU); Vuk, Tibor, 2837, Vértesszölös (HU); Rácz, László, 1145, Budapest (HU); Holló, András, 2440, Százhalombatta (HU); Szerencsés, Zoltán, 2045, Törökbálint (HU); Kovács, Ferenc, 2500, Esztergom (HU); Kovács, Imre, 2462, Martonvásár (HU); Tolvajné Németh, Krisztina, 2030, Érd (HU); Arányi, László, 1139, Budapest (HU); Stéger, Csaba, 1149, Budapest (HU); Valyon, József, 1026, Budapest (HU); Onestyák, György, 1165, Budapest (HU); Hanscók, Jenõ, 8200, Veszprém (HU); Krár, Márton, 8400, Ajka (HU); Nagy, Gábor, 7694, Hosszúhetény (HU); Varga, Zoltán, 8200, Veszprém (HU)
(74) Representative: Schläfer, Laszlo

(56) References cited:
- US-A1- 2002 005 009
- US-A1- 2005 171 374
- US-A1- 2008 156 694

## Description

This invention relates to fuels and fuel additives capable for use for internal combustion engines. An additional subject is a process for the environmentally-friendly production of said fuels and fuel additives by a special hydrocracking technology as well as the products obtained by said technology.

The various major types of internal combustion engines include the Otto motors, Diesel engines and the HCCI (homogenously charged compression ignition) engines, such as the Diesel-Otto engines (Alkidas A.C.: "Combustion advancements in gasoline engines", Energy Conversation Management, 2007, 48, p. 2752-2761). The fuels and fuel additives capable for use for powering these, for example gasoline and diesel oil as well as the additives employed in these, such as lubricity improvers and similar agents, are produced usually from fossil energy carriers, primarily from crude oil. Because of the more and more depleting volume and geographically uneven distribution of crude oil sources major research efforts have been extended in recent years for the development of fuels and fuel additives originating from alternative sources. This effort is enhanced by the fact that products originating in crude oil entail significant environmentally harmful effects and therefore the utilization of alternate sources is supported also for environment protection and nature preservation considerations.

Vegetable oils rich in triglycerides, such as sunflower oil, rape-oil, soybean oil, palm oil and the like, as well as slaughterhouse fats and spent oils and fats from deep fat fryers, classified as hazardous waste - such as those generated in restaurants, public catering and similar facilities - plus alga oils and similar substances can be utilized for example as alternative sources of feedstock.

Said feedstock types are converted to fuels generally by catalytic hydrocracking.

Several catalytic hydrocracking processes for producing high cetane number diesel oils from feedstocks rich in triglycerides have been described in recent years. Some examples of respective patents are: US 4,992,605; US 5,705,722; US 2006/0186020 A1; EP 1.857.525 A1 and US 2007/0260102 A1; US 2006/0264685 A1 and US 2008/0154073 A1; US 2007/0175795 A1; EP 2003/1396531 A2, EP 2008/1398364 A1, US 2004/0230085 A1, WO 2004/022674 A1, US 2004/0055209 A1, US 2007/0006523 A1, US 2007/0010682 A1, US 2007/0135669 A1, US 2007/0294938 A1; US 2006/0207166, US 7,232,935, US 7,279,018, US 7,511,181, US 2009/0077866 A1, US 2009/0078611 A1, US 2009/0193709 A1.

EP 1 396 531 A2 describes a process suitable for the conversion of triglycerides in at least two stages where oxygen removal takes place in the first stage and isomerization in the second, with dissolved gases being also removed between the two stages in specific cases. The preferred pressure is given as a value between 50 to 100 bars and the temperature as ranging from 300°C to 400°C. These pressure levels are disadvantageous in respect of both energetics and economics. The composition and main properties in respect of application technique of the products are not described.

US 4,992,605 describes a process suitable for producing C₁₅-C₁₈ normal paraffins from triglycerides under very severe operating conditions with the application of catalysts on transient metal carrier. The temperature range is 350-400°C and the pressure ranges from 48 to 152 bars. The reasons for these high levels are the non-adequately active catalyst(s) and the commonly used reactor system. The flow properties of the effluent product mix (the CFPP value estimated from the hydrocarbon composition may range from +21°C to +28°C) do not satisfy the specifications of EN Standard 590:2009 April, particularly for moderate and cold climatic zones.

WO 2009/039333 A1 describes a technology processing mainly alga/weed oils where carbon dioxide generated during the production process is also utilized for algae culture. This solution focuses primarily on CO₂ recovery and the absorbent solution usable in the process. Commonly known catalysts and reaction conditions are described for the conversion of triglyceride containing feedstocks.

US 2006/0207166 A1 recommends catalysts containing only noble metals (Pt or Pd) on highly acidic carriers (such as fluorinated A1₂O₃, ZSM-22, ZSM-38, ZSM-48, SAPO-11 and similar carriers) for the conversion of triglycerides under very severe operating conditions, e.g. in the temperature range of 370-410°C, with the consequence of the product (fraction) yield falling greatly (by 15-30% absolute) behind the theoretically achievable value.

The main disadvantages of the catalytic hydrocracking processes presented are as follow:
- the catalytic systems [catalyst(s), reactor internals, placement of catalyst(s), distribution of feed/H₂ over the depth and cross-section of the catalyst bed(s), process conditions: temperature, pressure and the like, the continuous assurance of the most active and selective shape and composition of the catalyst(s) and similar factors) enable the achievement of only about 55-75% product yield by once-through operation. These values fall considerably behind the product yield to feed rate ratios achievable theoretically and falling possibly between 81-86% depending on the reaction mechanism, which is primarily the function of the catalyst and the reaction conditions used (theoretical values apply only to triglycerides containing solely oleic acid as the acidic component of the molecule);
- the application of low conversion ratio is explained in several cases by the necessity to recycle a significant portion (up to 70-80%) of the product because of the highly exothermic (heat generating) nature of the reactions, which greatly increases the size of the vessel along with the capital costs and - naturally - the energy costs and other operating expenses as well due to recycling;
- heavier reaction products other than paraffins have to be recycled after separation for additional catalytic conversion - entailing considerable extra capital costs and operating expenses - and, furthermore, by-products are also produced from the recycle stream in the course of repeated catalytic conversion thus the achievable average output is further reduced due to cracking, without recycling provisions have to be made for the sale/disposal of by-products resulting in the reduced cost-effectiveness of the process;
- starting from traditional vegetable oils requires the use of high hydrogen flow because its demand is determined basically by the average number of double (olefinic) bonds in the fatty acid chains beyond the proportion of oxygen removal reactions (decarboxylation, hydrogenation and the like) and the length of hydrocarbon chains;
- the lubricity of the product consisting mostly of a mixture of C₁₀-C₁₈ paraffins falling into the boiling range of light gas oil is insufficient, therefore its application requires the use of lubricity improving additives in order to avoid the excessive wear of fuel supply and injection pump components, which results in additional costs;
- beyond the maintenance of a nearly constant activity and selectivity of the catalysts for prolonged periods and the mode of achieving this objective - even under the conditions of continuous dosing of some
sulfidizing agent - only rising the reaction temperature is mentioned, which is widely known and results in reduced product yield because of the increased proportion of cracking reactions as well as increasing the energy consumption - and thereby - also the CO₂ emission rate of the process.

The yield of diesel engine fuel produced by the processes known to date (for example US 2007/0068845 A1, US 2007/0170091 A1) by thermal splitting and catalytic hydrocracking of vegetable oils, animal fats and spent cooking oils of deep fat fryers and similar materials with traditional fatty acid composition is only 63-68.6% even after thermal splitting. Obviously, it-will be even less (at least by about 8-10 percent absolute) after the conversion by hydrogenation partly because of oxygen removal and partly because of the cracking of carbon chains. Thus the product yield falls significantly behind that achievable theoretically (about 81-86%).

In the two-stage process proposed for converting spent cooking oils and fats disposed from deep fat fryers quick thermal splitting of the feedstock is recommended as the first step in order to reduce hydrogen consumption and retain catalyst activity (for example US 2007/0068845 A1, US 2007/0170091 A1). The separate pressure vessel required for thermal splitting and the product separation unit requires considerable extra capital investment for the application of this process and, furthermore, the 480-600°C temperature range as well as the supply of the necessary inert gas require considerable additional energy consumption, which - among others - also results in higher CO₂ emission rates. Additionally, the thermal cracking reactions also lead to the formation of low-value C₁-C₆ hydrocarbons, resulting thereby also in a further reduction of the achievable product yield. The volume of the coke-like substance formed in the process is also significant: 1.4-3%.

US 2002/0005009 A1 discloses a jet fuel containing a 250-550°F (121-260°C) fraction derived from a Fischer-Tropsch process including at least 95 wt% paraffins with an iso to normal ration of about 0.3 to 3.0 and about 0.005 to 0.5 wt% oxygen primarily as linear alcohols.

US 2005/0171374 A1 discloses a process for producing levulinic acid esters from α-angelica lactone and olefms, the compositions produced therefrom and the uses thereof as fuel and fuel additives for improving the octane number and cetane number.

We have recognized that the value of the theoretical yield is determined basically by the average length of the hydrocarbon chain of the fatty acids contained in the triglycerides, therefore the feedstocks rich in triglycerides - chosen and processed on the basis of the known solutions - theoretically limit the increase of product yield. In addition, relatively less hydrogen is required for the oxygen removal from triglycerides containing fatty acids with longer carbon chains and/or less CO and CO₂ is generated. Further, we have recognized that the yield of hydrocracking can be increased significantly and the cost-effectiveness of the process can be improved if the processing conditions - thus for example the temperature and pressure levels - as well as the feedstock load on the catalyst and the hydrogen consumption rate are adjusted within preset ranges.

We have found on the basis of the above recognition that feedstocks rich in triglycerides which contain triglycerides including fatty acids with carbon numbers of C₂₀ and higher in larger quantities than the feedstocks utilized to date can be utilized advantageously for the production of fuels and/or fuel additives capable for use in internal combustion engines. Further, we have found that fuels and/or fuel additives can be produced especially advantageously by a special hydrocracking process. Finally we have found that new fuels and/or fuel additives - having more advantageous properties compared to the known fuels and/or fuel additives - can be produced by said special hydrocracking process starting from the above-mentioned feedstocks.

Accordingly, the invention relates to the following:
1. A paraffin fraction consisting of 98.0-99.9% by weight C₄-C₁₂ i- and n-paraffins with 1:4 to 4:1 i/n mass ratio and 0.1-2.0% by weight C₄-C₁₀ carboxylic acid esters, wherein the boiling range of the paraffin fraction is 20-250°C.
2. The use of the product according to claim 1 in internal combustion engines as fuel and/or fuel blend component.

Product A according to this invention is a mixture of 98-99.9% by weight i- and n-paraffins containing four to twelve - preferably five to twelve - carbon atoms and 0.1-2.0% by weight - preferably 0.05-1.5% by weight and even more preferably 0.075-0.5% by weight - carboxylic acid esters containing four to ten, preferably four to six and even more preferably four to five carbon atoms.
The ratio of iso and normal isomers in the mixture of i- and n-paraffins (hereinafter i/n ratio) is generally 1:4 to 4:1, preferably 1:3 to 3:1 and even more preferably 2:3 to 3:2.
The boiling range of product A is 20-250°C, preferably 35-220°C and even more preferably 40-210°C.
As examples of paraffins occurring in the mixture of i- and n-parafins, i- and n-pentane, i- and n-hexane, i- and n-heptane, i- and n-octane, i- and n-nonane, i- and n-decane, i- and n-undecane and i- and n-dodecane may be mentioned. The i-paraffins contained in the mixture of i- and n-paraffins are paraffins with branched carbon chains in which the location of branching is arbitrary, but preferably is located at the second to fifth carbon atom from the end of the chain and the side branch is preferably a methyl group and/or ethyl group. Advantageous components of the mixture of i- and n-paraffins are i-pentane, 2,2-dimethyl-butane, 2,3-dimethyl-butane, 2,2-dimethyl-pentane, 2,2,3-trimethyl-butane and 2,2,4-trimethyl-pentane.
As examples of carboxylic acid esters occurring in the mixture of carboxylic acid esters, butyl-formate, butylacetate, methyl-propionate, ethyl-propionate, propyl-propionate, butyl-propionate, heptyl-propionate and methyl-nonanoate may be mentioned. Advantageous component in the mixture of carboxylic acid esters is butyl-formate.

Product A according to this invention can be advantageously used in Otto and/or HCCI engines as a fuel having excellent inherent lubricity due to the mixture of carboxylic acid esters contained therein. Therefore product A may be used as motor fuel by itself, i.e. without the commonly used state of the art additives, as well as blended with the standard additives. Furthermore, product A can be used as a component of fuel blends, preferably as a lubricity improver component. The amount of product A in such fuel blends is generally 2-20% by weight, preferably 2-10% by weight and even more preferably 7-9% by weight.

The inherent lubricity of product A according to this invention is verified by the test results given in Table 1. It can be established from the data of Table 1 that mixtures of i- and n-paraffins with 5 to 12 carbon numbers and various ratios, falling outside of the scope of this invention (such as the mixtures of products yielded by the UOP HF alkylation technology [so-called alkylates] and C₅-C₇ i-paraffins) possess low lubricating capability by themselves and therefore result in a large wear diameter of the test specimen in the HFRR test described hereinafter. This means that these materials may cause significant wear in the fuel supply system, particularly in the fuel supply and injection pumps and the fuel injection nozzles. The data of Table 1 also show that the lubricity of product A according to this invention is clearly better and thus improves the lubricity of conventional fuels when blended into those and therefore eliminates the necessity of using separate lubricity improver additives.

**Table 1**

| **Lubricity of gasoline fraction** | |
|---|---|
| **Gasoline fraction** | **Wear diameter, µm** |
| C₅-C₇ i-paraffins | 840 |
| Alkylate | 725 |
| Product A (according to this invention) | 310 |

Product B is a mixture of 95.00-99.95% by weight i- and n-paraffins containing ten to twenty five, preferably twelve to twenty and even more preferably fourteen to eighteen carbon atoms, consisting in main bulk of n-paraffins and to a lesser degree of i-paraffins, and 0.05-1.00% by weight carboxylic acids containing twelve to fourteen carbon atoms and/or carboxylic acid esters containing twelve to sixteen carbon atoms.
The i/n ratio in the mixture of i- and n-paraffins is generally 1:9 to 5:6, preferably 1:4 to 2:3 and even more preferably 1:2 to 3:7.
The boiling range of product B is 160-400°C, preferably 180-360°C and even more preferably 180-345°C. As examples of the i- and n-paraffins occurring in the mixture of i- and n-paraffins, i- and n-decane, i- and n--undecane, i- and n-dodecane, i- and n-tridecane, i-and n-tetradecane, i- and n-pentadecane, i- and n-hexadecane, i- and n-heptadecane, i- and n-octadecane, i- and n-nonadecane and i- and n-eicosane may be mentioned. The i-paraffins contained in the mixture of i- and n-paraffins are paraffins with branched carbon chains in which the location of branching is arbitrary, but is located preferably at the second to seventh and especially preferably at the second and fifth carbon atom from the end of the chain and the side branch is preferably a methyl group and/or ethyl group. Advantageous components of the mixture of i- and n-paraffins are n-pentadecane and n-hexadecane, as well as 5-methyl-hexadecane and 2-methyl-tridecane.
As examples of carboxylic acids occurring in the mixture of carboxylic acids and/or carboxylic acid esters, dodecanoic acid (lauric acid), tridecanoic acid and tetradecanoic acid may be mentioned. As examples of carboxylic acid ester, ethyl-caprinate, butyl-octanoate, propyl-laurate, methyl-myristate, butyl-laurate and ethyl-myristate may be mentioned. As preferred examples of carboxylic acids occurring in the mixture of carboxylic acids, and/or carboxylic acid esters, dodecanic acid and tetradodecanoic acid may be mentioned while methyl-esters may be mentioned as preferred examples of carboxylic acid esters.
The mass ratio of carboxylic acids to carboxylic acid esters in the mixture of carboxylic acids and/or carboxylic acid esters is 1:100, preferably 1:40 and even more preferably 1:30.

The sulfur and nitrogen content of product B is favorably less than 5 mg/kg, especially favorably less than 1 mg/kg as well as preferably containing aromatic and cycloalyphatic components at only up to 2% by weight level and especially preferably at up to 1% by weight level. Additionally, its cetane number is at least 74, preferably 85-89 and especially preferably 90-95. Furthermore, product B possesses excellent inherent lubricity partly due to the i- and n-paraffins with higher carbon numbers and partly to the carboxylic acids and/or carboxylic acid esters contained therein.

Product B can therefore be used advantageously in Diesel engines as a fuel where - due to its inherent lubricity - it may be used as motor fuel by itself, i.e. without the commonly used state of the art additives , or blended with the standard additives. Furthermore, Product B can be used as a component of fuel blends, preferably as a lubricity improver component. The amount of product B in such fuel blends is generally 2-30% by weight, preferably 4-25% by weight and especially preferably 5-20% by weight.

Product C is a mixture of 5-20% by weight, preferably 7-10% by weight carboxylic acids containing nine to fourteen, preferably ten to twelve carbon atoms, and 80-95% by weight, preferably 90-93% by weight carboxylic acid esters containing twelve to nineteen carbon atoms.

As examples of the carboxylic acid occurring in the mixture of carboxylic acids, nonanoic acid, decanoic acid, undecanoic acid, dodecanoic acid, tridecanoic acid, tetradecanoic acid and palmitic oil acid may be mentioned. Preferred components of the carboxylic acid mixture are the decanoic acid and dodecanoic acid.
As examples of the carboxylic acid esters occurring in the mixture of carboxylic acid esters, methyl-palmitate, methyl-pentadecanoate, ethyl-pentadecanoate, methyl-tridecanoate, ethyl-tridecanoate, methyl-myristate, ethyl-myristate, ethyl-pentadecanoate, methyl-palmitoleate and methyl-oleate may be mentioned. Preferred components of the mixture of carboxylic acid esters are the methyl-tridecanoate, methyl-palmitoleate and methyl-oleate.
Product C can be used as lubricity improver additive in motor fuels and fuel blends, preferably with low sulfur and nitrogen contents, as well in motor fuels and fuel blends with reduced aromatics levels, in an amount of 100-2000 mg/kg, advantageously in 200-1500 mg/kg and especially advantageously in 300-600 mg/kg. The lubricity improving effect of product C in fuel, such as in E85 (ASTM D5798) motor gasoline and diesel oil, is illustrated in Table 2 as determined by HFRR lubricity test.

**Table 2**

| **Lubricity improving effect of polar product mix C according to this invention** | |
|---|---|
| **Fuel** | **Wear diameter, µm** |
| Motor gasoline A | 805 |
| Motor gasoline A+ 100 mg/kg product C | 310 |
| E85 gasoline without wear reducing agent | 920 |
| E85 + 200 mg/kg product C | 370 |
| Diesel oil B | 685 |
| Diesel oil B + 150 mg/kg product C | 410 |

Product D is a mixture of i- and n-paraffins containing ten to twenty six, preferably ten to twenty four and even more preferably eleven to twenty two carbon atoms, where the i/n ratio is generally 1.5:1 to 5:1, preferably 2:1 to 4:1 and even more preferably 2.5:1 to 3.3:1.
The boiling range of product D is 160-420°C, preferably 180-370°C and even more preferably 190-360°C.
As examples of the i- and n-paraffins occurring in the mixture of i- and n-paraffms, i- and n-decane, i- and n-undecane, i- and n-dodecane, i- and n-tridecane, i-and n-tetradecane, i- and n-pentadecane, i- and n-hexadecane, i- and n-heptadecane, i- and n-octadecane, i- and n-nonadecane, i- and n-eicosane, i- and n-heicosane, i- and n-docosane, i- and n-tricosane, i- and n-tetracosane, i- and n-pentacosane and i- and n-hexacosane may be mentioned. The i-paraffins contained in the mixture of i- and n-paraffins are paraffins with branched carbon chains in which the location of branching is arbitrary, but is located preferably at the second to seventh carbon atom from the end of the chain and the side branch is preferably a methyl group, ethyl group and/or propyl group. Especially advantageous components of the n-paraffins are n-paraffins containing fifteen to eighteen carbon atoms, such as n-pentadecane, n-hexadecane, n-heptadecane and n-octadecane, while especially advantageous components of i-paraffins are 2-methyl-undecane, 2-methyl-dodecane, 2-methyl-tridecane, 2-methyl-tetradecane, 2-methyl-pentadecane, 2-methyl-hexadecane, 2-methyl-heptadecane, 5-methyl-hexadecane, 5--methyl-heptadecane, 5-methyl-octadecane, 5-methyl-nonadecane, 5-methyl-eicosane and 2,4,6-trimethyl-nonadecane.
The amount of substances in Product D other than i- and n-paraffins, such as olefins and/or alkyl-aromatics, is up to 5% by weight, preferably up to 3% by weight and especially advantageously up to 1% by weight.

The sulfur and nitrogen content of product D is favorably less than 5 mg/kg, especially preferably less than 1 mg/kg, as well as advantageously devoid of aromatic and olefinic components. Additionally, product D possesses excellent inherent lubricity due to the i- and n-paraffins with higher carbon numbers.

Product D can therefore be used advantageously in Diesel engines as a fuel where - due to its inherent lubricity - it may be used as motor fuel by itself, i.e. without the commonly used state of the art additives, or blended with the standard additives. Product D can be used furthermore as a component of fuel blends, preferably as a lubricity improver component. The amount of product D in such fuel blends is generally 5-50% by weight, favorably 20-40% by weight and especially favorably 20-30% by weight.

The above are supported by the data shown in Table 3. It clearly shows that product D has a higher cetane number and better lubricating capability than that of a mixture containing only shorter i- and n-paraffins. The test was performed in accordance with EN ISO Standard 5165.

**Table 3**

| **Cetane number and lubricity of product D according to this invention compared to the corresponding data of a typical product obtained from a traditional feedstock with average carbon number** | | |
|---|---|---|
| **Fuel** | **Cetane number** | **Wear diameter, µm** |
| Mixture of C₁₂-C₁₈ i- and n-paraffins | 76 | 585 |
| Product D (according to this invention) | 82 | 420 |

The three paraffin fractions (products A, B and D) and the polar product mix (product C) are produced advantageously by a special hydrocracking process. This special hydrocracking process differs from the usual hydrocracking process (Hydrocarbon Processing, 1988, Refining Handbook, Houston, Gulf Publishing Co.) in that the processing parameters are adjusted between relatively narrow limits and their beneficial combination results in reaction products with new composition in an unexpected manner at a yield exceeding that achieved by the current state of the art.

In the course of the special hydrocracking process according to this invention the feedstock is treated with hydrogen at 160-420°C temperature and 5-100 bars pressure in the presence of a heterogeneous catalyst applied on a carrier, where the volumetric ratio of hydrogen to feedstock is 200-2000 Nm³/m³ and the hourly feedstock load (feed rate) is up to 10m³ feed/m³ catalyst.

In the course of the process according to this invention the feedstock is converted by contacting it with hydrogen and catalyst. The conversion of the feedstock takes place in several sequential reaction steps. The conversion starts with the hydrogenating saturation of the unsaturated carbon-carbon bonds, resulting in the formation of saturated triglycerides. The next step is the break-up of the ester bonds in the triglycerides, resulting in the formation of fatty acids (carboxylic acids) and propane. Further on the fatty acids are converted into paraffins, accompanied by water formation and/or carbon dioxide and carbon monoxide generation. The paraffins formed may undergo cracking to a small extent during the process and hydrocarbons with shorter carbon chains may form. The branched chain i-paraffins are formed in the course of isomerization reactions from straight chain hydrocarbons, particularly from n-paraffms.

Both the feedstock and the intermediate products may take part in secondary reactions during the process. Such a reaction is the formation of gum from the unsaturated triglycerides and fatty acids present in the feedstock Another secondary reaction is the reaction of the formed fatty acid intermediate products with the alkaline metal and alkaline earth metal contaminants of the feedstock, during which tenside-like compounds (soaps) may form.

Any raw material suitable for the production of paraffin fractions, preferably paraffin fractions usable as motor fuel, fuel blend component and/or additives of motor fuels and fuel blends can be used as the initial feedstock in the process according to this invention. Raw materials originating in renewable sources are preferred. As examples of such raw materials, oils and fats of vegetable and/or animal origin and mixtures of these can be mentioned, which contain triglycerides and/or fatty acids and/or fatty acid esters. These may originate partially or totally from the forestry and agriculture sectors, from the food industry (e.g. slaughter-houses, meat processing), family cooking and public catering and similar sources, for example vegetable oils [sunflower seed oil, rape oil, peanut oil, oils/fats produced from specially bred plants (from hybrid plants, such as hybrid plants containing erucic acid) or genetically modified plants], animal fats and tallow, spent cooking oils and fats from deep fryers (preferably spent fats of the special Hungarian hog, Mangalica), alga oils and similar substances. Blends of the above feedstocks and fossil energy carriers, such as mixtures of crude oil and derivatives thereof may also be utilized.

The carbon number of the fatty acid components of triglycerides and/or fatty acids and/or various fatty acid esters present in the feedstocks is 6 to 28 or higher. Feedstocks containing fatty acids and/or fatty acid components with carbon numbers ranging from 20 to 28 are especially advantageous. The sulfur content included in the organic bonds of the feedstocks is preferably up to 1000 mg/kg and the aromatic hydrocarbon content is up to 10% by weight.

The initial feedstock undergoes optionally a pretreatment. Pretreatment can be realized for example by heat treatment and/or physical and/or chemical methods. Cleaning carried out with indifferent materials (such as bentonite, pearlite) for purification and/or filtration and mild pre-hydrogenation at 50-350°C, preferably at 150-200°C temperature and 5-60 bars, preferably 10-30 bars pressure may be mentioned as examples of feedstock pretreatment. The catalyst usable for pre-hydrogenation is one or more metal(s) included in group VIII and/or group VIB of the periodic system and/or compounds thereof, such as palladium, platinum, nickel-molybdenum, cobalt-molybdenum, nickel-cobalt-molybdenum, optionally applied onto some carrier, such as alumina, silica and/or zeolite carriers. The application of the non-pyrophoric Raney-nickel catalyst is particularly advantageous. In the course of pre-hydrogenation (pre-hardening) preferably not only the saturation of double olefinic bonds is carried out in order to avoid undesired secondary reactions, but the components poisonous for the catalyst(s) of the subsequent catalytic step(s) (alkaline metals, for example) are also removed.

In this special hydrocracking process the optionally pretreated feedstock is contacted with one or more heterogeneous catalyst(s) at temperatures ranging from 160°C to 420°C, preferably from 200°C to 310°C and especially preferably from 220°C to 360°C. The total pressure is 5-100 bars, preferably 10-70 bars and especially preferably 10-40 bars. The value of the hourly feedstock load (feed rate) is up to 10 m³ feedstock/m³ catalyst. The volumetric hydrogen to feedstock ratio is 200-2000 Nm³/m³, preferably 300-800 Nm³/m³ and especially preferably 350-600 Nm³/m³.

The special hydrocracking process is preferably carried out in the presence of some heterogeneous catalyst applied on some carrier. The suitable heterogeneous catalyst applied on some carrier is chosen as one or more metal(s) included in group VIII and/or VIB of the periodic system and compounds thereof applied on some carrier. As examples of the one or more metal(s) included in group VIII and/or VIB of the periodic system, nickel, cobalt, molybdenum, tungsten, nickel-molybdenum, cobalt-nickel-molybdenum and similar metals and alloys may be mentioned. As examples of metal compounds, oxides, sulfides, nitrides, phosphides and the like may be mentioned. Preferred metal compounds are the nickel-oxide, nickel-sulfide, molybdenum-oxide, molybdenum-sulfide, tungsten-oxide and tungsten-sulfide. Especially advantageous catalysts are the NiMo, MoCo, NiMoCo and NiW metal combinations and fully or partially sulfidized variants thereof, as well as the NiMoP and sulfidized NiMoP metal compound. Amorphous alumina, silica, amorphous Al₂O₃-SiO₂, magnesium-oxide and mixtures thereof are suitable as carrier media for example. Carriers with pore sizes of 2-50 nm in general but preferably of 5-30 nm, i.e. containing so-called mezopores, and having at least a specific surface area of 300 m²/g, can be used advantageously. As favorable examples of heterogeneous catalyst applied on carrier, NiMo/Al₂O₃, NiMoCo/Al₂O₃, NiW/Al₂O₃, NiMoP/Al₂O₃, sulfidized NiMoP/Al₂O₃ and NiMo/amorphous SiO₂-Al₂O₃ can be mentioned. The heterogeneous catalysts on carrier applied in the context of this invention optionally may also contain other elements and compounds as well, such as boron, zirconium- and/or titanium-oxides and/or phosphoric acid anhydrides. Catalysts containing phosphorus and/or boron are advantageous.

During the implementation of the process, either the same catalyst may be used for the entire process, or the various stages of the process are carried out with two or more different catalysts. In this latter case two or more different catalyst beds are installed in the same vessel if one single reactor is used, or two or more different catalysts are installed both inside one reactor or in each reactor if several reactors are used.

Preferably the metals are present on the carrier in partially or totally sulfidized condition, i.e. in the form of metal-sulfides.

In order to maintain the sulfidized condition of the catalyst at a constant level, the catalyst system is preferably contacted with a sulfidizing agent during the process, because the reversibly bound sulfur is carried away continuously from the catalyst surface by the effluent product mix. To make up this sulfur loss, hydrogen sulfide may be used as sulfidizing agent, for example in the form of a gas containing hydrogen sulfide (e.g. in the form of the off-gas from a hydrodesulfurizing unit containing hydrogen sulfide) and/or a sulfur compound easily decomposing at the reaction temperature, for example dialkyl-disulfide, such as dimethyl-disulfide, diethyl-disulfide, ethyl-methyl-disulfide or di-tert-butyl-disulfide, dialkyl-polysulfide, such as dioctyl-polysulfide, and/or sulfur compounds containing oxygen, such as dimethyl-sulfoxide or methyl-mercapto-acetate, ethyl-2-mercapto-acetate, ethyl-hexyl-mercapto-acetate or methyl-3-mercapto-propionate. The amount of the sulfidizing agent is generally at least 500 vppm, favorably minimum 0.15% (v/v) and especially advantageously 0.25% (v/v).

We have recognized that the activity and selectivity of the catalyst(s) employed remains at nearly constant level if agents inhibiting oxidation and/or gum formation are added to the feedstock as indifferent materials in the special hydrocracking process according to this invention. The cause of this is that the components containing olefinic double bonds of both the feedstock and the intermediate product undergo spontaneous reactions resulting in coke-like substances depositing on the catalyst and thereby deactivating it, which leads to increased pressure drop across the reactor, and in the worst case, to fouling/plugging thereof. Such agents inhibiting oxidation and/or gum formation are for example the following: dialkyl-phenols, such as di-tert-butyl-phenol, polyalkyl-phenols, dialkyl-cresols, such as the 2,6-di-tert-butyl-p-cresol, as well as dialkyl-biphenyl-amines, such as the diethyl-biphenyl-amine or ethyl-methyl-biphenyl-amine and the like. The combined application of alkyl-biphenyl-amines and methyl--bis-di-tert-butyl-phenol (MBDTBP) is especially preferred. The agent inhibiting oxidation and/or gum formation is generally used in the range of 20-1000 mg/kg, preferably 200-1000 mg/kg and especially advantageously 300-400 mg/kg with respect to the amount of the feedstock.

In a preferred embodiment of the process the sulfidizing agent, for example dimethyl-disulfide, and the agent inhibiting oxidation and/or gum formation are employed simultaneously, contributing an especially advantageous synergistic effect in maintaining the catalyst activity at a constant level and in increasing the product yield.

The maintenance of the activity and selectivity of the catalyst(s) employed is further facilitated by the circumstance that the tenside-like compounds (soaps) formed as intermediate products from the feedstock (see above) prevent the adhesion of the precursors of gum and coke formation on the surface of the catalyst(s) due to their surface-active (detergent) effect, further extending the service life of the catalyst(s). In a subsequent phase of the process according to this invention these tenside-like compounds undergo additional reactions and reaction products containing the desired compounds are also formed from these. As the result of the combined effect of the sulfidizing agent as well as the agent inhibiting oxidation and/or gum formation dosed according to this invention, plus said tenside-like compounds, the service life (cycle time) of the catalyst(s) can be extended by 100-150%.

As mentioned above, during the process the feedstock is converted to the desired one or more paraffin fractions through a series of operations comprising several reactions. These reactions may be divided into three main groups. In the first group of reactions, double bonds are saturated and the esters are decomposed. Thus, the decomposition of triglycerides is completed in the course of these reactions, and carboxylic acids, carboxylic acid esters as well as tenside-like compounds are formed. In the second group of reactions, the carboxylic acids, carboxylic acid esters as well as tenside-like compounds are further decomposed, resulting in the formation of n/i-paraffins. Finally in the third group of reactions, the desired concentrations of carboxylic acids and carboxylic acid esters is adjusted, as well as the sulfur content is removed. All the reactions taking place entail heat generation but the rate of heat generation differs from group to group. Thus the process according to this invention can be divided into several steps based on the reactions taking place, where the reactions taking place can be controlled on the basis of temperature increase occurring as the consequence of heat generation.

One preferred embodiment of the process is carried out according to the above series of reactions in one or more steps and in one or more reactors per step under identical or differing conditions per step and/or reactor. In an especially preferred embodiment, the process is carried out in three steps conforming to the above-mentioned three groups of the reactions taking place. The first step is realized in one or more, generally in up to 10, preferably in up to 6 and especially advantageously in up to 3 reactors. The second step is realized in one or more, generally in up to 12, preferably in up to 6 and especially advantageously in up to 2 reactors. Finally, the third step is realized in one or more, generally in up to 3, preferably in up to 2 reactors.

The temperatures of the reactors used in each step are adjusted on the basis of the heat generating properties of the reactions taking place as follows. The inlet temperature of the reactor is set as a function of the chemical properties of the feedstock (such as the specific number of double bonds, the concentration of triglycerides and the like) to a value enabling the temperature rise taking place in the reactor as the consequence of exothermic chemical reactions, i.e. the difference between the inlet and outlet temperatures of the stream, to reach the level desirable for the various reactions to take place in the reactor at the desired rates. In this way it will be possible to achieve the formation of the desired intermediate and/or final products (for example tenside-like compounds, oxygen-containing polar compounds) at the desired rates. The formation of the tenside-like compounds is desirable in the reactor used for the first step, therefore the feedstock has to be introduced into the reactor at a temperature lower than customary. The conversion of intermediate products to final products is desirable in the reactor of used for the third step and this can be achieved by introducing the feed stream into this reactor at a higher temperature than customary. In the way described, the temperature will increase along the reactor in the flow direction of the feed streams, i.e. the temperatures of the inlet and outlet streams will not be identical.

In a preferred embodiment of the process, the inlet temperature used for the first step is generally 160-300°C, preferably 180-280°C and especially advantageously 200-250°C. The inlet temperature used for the second step is generally 200-360°C, preferably 250-340°C and especially advantageously 280-300°C. The inlet temperature used for the third step is generally 300-400°C, preferably 320-380°C and especially advantageously 340-370°C.

The formation of the desired intermediate and/or final products in each step can be influenced - in addition to temperature, although to a lesser extent - by the proper adjustment of other process parameters.

In a preferred embodiment of the process, the catalyst used in the first step is chosen arbitrarily from the catalyst applied on carrier as specified previously, preferred are the metal, metal complex and metal compound catalysts applied on carrier. The catalyst used in the second step is preferably partially or fully sulfidized metals, metal-phosphides or the mixture of partially or fully sulfidized metals and metal-phosphides, where the carrier medium is preferably Al₂O₃ or amorphous SiO₂-Al₂O₃ with pores of 2-50 nm in general, preferably of 5-30 nm diameter, i.e. so-called mezopores, having a specific surface area of at least 300 m²/g. The catalyst used in the third step is preferably partially or fully sulfidized metals, metal-phosphides or the mixture of partially or fully sulfidized metals and metal-phosphides, where the carrier is preferably Al₂O₃ or amorphous SiO₂-Al₂O₃.

In a preferred embodiment of the process, the volumetric hydrogen to feed ratio is adjusted to 200-500 Nm³/m³ value in the first step, to 500-1500 Nm³/m³ value in the second step and to 600-2000 Nm³/m³ value in the third step.

In a preferred embodiment of the process, the feed rate is continuously reduced in the sequence of the first, second and third steps. This is achieved advantageously by carrying out the subsequent step with identical feed charge rate but over increasing volumes of catalyst beds.

As mentioned above, an especially preferred embodiment of the process is carried out in three steps and with several reactors used in each step. The first step is realized generally in up to 10, preferably in up to 6 and especially advantageously in up to 3 reactors. The second step is realized generally in up to 12, preferably in up to 6 and especially advantageously in up to 2 reactors. And finally the third step is realized generally in up to 3 and preferably in up to 2 reactors.

In the case of using several reactors for each step, not only individual steps can be carried out under different conditions, but process conditions differing between the reactors can be adjusted also for the reactors used in the particular step.

In a preferred embodiment of the process the inlet temperature of each reactor is adjusted so as to achieve identical temperature rising rates in each reactor. In order to accomplish this, the inlet temperature of the feed stream charged to the first reactor is set to the advantageous value mentioned above and then the effluent of the first reactor is sent to the second reactor at a temperature adjusted to a lower value than its outlet temperature. Setting the inlet temperature is carried out in the same way for all the reactors used in the particular step. The preset value of the inlet temperature preferably increases at each subsequent reactor in direct proportion to the number of reactors, that is the inlet temperature of each subsequent reactor is higher than the inlet temperature of the preceding reactor. The rate of increase of inlet temperatures depends on the number of processing steps. The increase of the inlet temperature per reactor in the first step is generally 0-50°C, preferably 5-30°C and especially advantageously 10-20°C and the inlet temperatures are preferably increased logarithmically, depending on the number of reactors. The increase of the inlet temperature per reactor in the second step is generally 0-30°C, preferably 5-20°C and especially advantageously 10-15°C and the inlet temperatures are preferably increased logarithmically or linearly, depending on the number of reactors. The increase of the inlet temperature per reactor in the third step is generally 0-20°C, preferably 5-15°C and especially advantageously 5-10°C.

The above statement, i.e. that in addition to temperature control the formation of the desired intermediate and/or final products can be influenced also by the other operating conditions of the process, applies even in the case of employing several reactors for each step.

In another preferred embodiment of the process different catalysts are used in the reactors used for the first step. In the first, second and optionally in the third reactor of the first step, advantageously metal catalysts on carrier, for example NiMo/Al₂O₃ or NiMoCo/Al₂O₃ are used, while the catalyst used in the further reactors are partially or fully sulfidized metals, metal-phosphides or the mixture of partially or fully sulfidized metals and metal-phosphides, where the carrier medium is preferably Al₂O₃ or amorphous SiO₂-Al₂O₃, preferably sulfidized NiMoP/Al₂O₃.

In respect of the process the interpretation of the term reactor covers all equipment and/or technical facilities that enable the realization of chemical reactions separated in space and/or time and in a controlled manner. The term reactor may mean therefore a reactor vessel, a tubular reactor, a column, and the like, or separate parts formed in the internal volume of these, for example chambers or sections inside columns as well as series of these.

Adjusting the desired inlet temperature of the subsequent reactor from the outlet temperature of a reactor effluent stream can be realized by any known method In the case of using a series of reactors or columns, said temperature setting can be realized for example by using heat exchangers arranged between subsequent reactors or columns. In the case of using a multi-section column, said temperature setting can be realized advantageously with the use of intercoolers. In this latter case another suitable method is to feed the necessary hydrogen gas in several batches for each section and utilizing the cooling effect of hydrogen gas introduced in cold condition for cooling down the stream between said sections.

The product yield (with respect to the feed charge rate) achievable with the process is about 5-10 percents absolute (by about 8-20 relative percents) higher than in any process known from the current state of the art. Hydrogen consumption is also lower (only 1.7-2.3 kg H₂/100 kg triglyceride instead of 2.3-3.0 kg H₂/100 kg triglyceride or only 1.2-1.4 kg H₂/100 kg triglyceride in the case of, for example, triglycerides with high, >90%, contents of oleic acids), which results by itself are significant in energy-savings and reduction of carbon dioxide emissions.

Products A, B, C and D are recovered by the separation of the hydrocarbon mixture remaining from the mixed products of special hydrocracking after the removal of the gaseous products and the water formed during oxygen removal by hydrogenation. Separation can be realized by any standard technology, advantageously by distillation in trayed or packed columns. The separation of products A, B, C and D is carried out on the basis of the boiling ranges given hereinbefore. Accordingly, the fraction yielding product A is drawn by the distillation of the remaining hydrocarbon mixture in a trayed or packed column at the 20-250°C, advantageously at the 35-220°C and especially advantageously at the 40-210°C boiling range, the fraction yielding product B is drawn at the 160-400°C, advantageously at the 180-360°C and especially advantageously at 180-345°C boiling range while the fraction yielding product D is drawn at the 160-420°C, advantageously at the 180-370°C and especially advantageously at 190-360°C boiling range. Product C remains in all cases as a bottom product after the separation of the fractions yielding products A, B and/or D.

According to a preferred embodiment of the special hydrocracking process the process is carried out in two reactors connected in series for easier control of the reactions taking place and the interstage removal of the considerable reaction heat generated, as well as in order to obtain product mixtures having the desired composition. In the course of this a portion (advantageously 5-20%) of the first reactor effluent is removed and, combined with the product mixture of the second reactor, is sent to separation by distillation. This ensures to have the carboxylic acids and esters providing lubricity improving (and partly corrosion inhibiting) effects present in appropriate proportions in products A, B and C.

The reaction is controlled in the first reactor so that the product mixture will not contain glycerin derivatives anymore, but the concentration of compounds containing oxygen will still be at least 10-40%. This is achieved by setting the catalyst bed temperature in the range of 260-300°C, where the value of the temperature gradient (rate of increase) over the catalyst bed is kept at most in the range of 10-15°C and the value of the hourly feedstock load (feed rate) set in the 1.1-1.3 m³ feedstock/m³ catalyst range.

In the course of producing product D, the special hydrocracking process is carried out advantageously over sulfidized NiMo/Al₂O₃, NiMoCo/Al₂O₃, NiW/Al₂O₃, NiMoP/Al₂O₃ or NiMo/amorphous SiO₂-Al₂O₃ catalyst, with the dosing of 700 mg/kg dimethyl-disulfide to replenish the sulfidizing agent and 300 mg/kg di-tert-butyl-phenol/dialkyl-biphenyl-amine in 2:1 mass ratio, as indifferent material controlling the reaction, furthermore with the combined application of 280-320°C temperature range and 20-40 bars pressure range, 0.8-1.5 m³ feedstock/m³ catalyst hourly feed rate and 350-600 Nm³/m³ volumetric hydrogen to feed ratio. The product obtained in this manner is then subjected to isomerization, as described below, if desired.

According to another advantageous embodiment of the process, the feedstock rich in triglycerides, containing at least 4-10% by weight fatty acids with carbon numbers exceeding C₁₈, is pretreated by clarification and filtration and/or pre-hydrogenation on a catalyst, advantageously on non-pyrophoric Raney-nickel catalyst. Subsequently it is mixed with 300 mg/kg to 3000 mg/kg sulfidizing agent and 20-1000 mg/kg oxidation and gum formation inhibitor. In the next step, it is then mixed with hydrogen gas or synthesis gas (having alt least 2:1 H₂/CO ratio), produced from the C₁-C₄ byproducts of the process (see later), and sent through the catalyst system at 100-410°C temperature, 10-100 bars pressure under the conditions of 300-1000 Nm³/m³ volumetric hydrogen to feed ratio and 0.5-4.0 m³ feedstock/m³ catalyst hourly feed rate. The product mixture obtained is sent to a separator unit. Here the product mixture is split into a gas stream, an aqueous stream and a liquid organic product stream. The gas stream is recycled to the reactor after partial blow-down and the addition of hydrogen from an external source, or piped out to the fuel gas network. The liquid organic product stream is sent to a distillation column where it is separated into A+B or A+D or A+B+C or A+D+C product streams in the way described above.

The amount of each product depends for example on the catalyst(s) employed and the reaction conditions. Thus, for example, if the process is operated under the conditions of 220-320°C temperature, 10-40 bars pressure, 0.5-4.0 m³ feedstock/m³ catalyst hourly feed rate and 350-650 Nm³/m³ volumetric hydrogen to feed ratio, then the output of the fraction yielding product A is generally 1-10%, the output of the fraction yielding product B is generally 70-86% and the output of the fraction yielding product C is 0.8-9%.

The process yields at least two products (for example A+B, A+D, A+B+C, A+C+D) for feedstocks rich in triglycerides, preferably containing at least 50% by weight triglyceride.

Should the flow properties of the product obtained be unacceptable, i.e. its CFPP value would be too high, and a lower CFPP value is intended to be adjusted, then the proportion of i-paraffins, having a lower CFPP value than n-paraffins, have to be increased in the product. The product has to be subjected to an isomerization process for this purpose.

In the course of isomerization, the n-paraffm components of the product are converted to i-paraffins in the presence of hydrogen gas and an isomerization catalyst. The isomerization catalyst partially breaks up a C-C bond in the paraffin chain and enables thereby the migration of the molecule portion inside the molecule. A new C-C bond in formed as the termination of migration, thereby creating a branch inside the molecule. The migrating molecule portion contains generally one or two carbon atoms, thus the isomer created will be an i-paraffin containing a methyl or ethyl branch. The catalysts applicable in the isomerization process are for example the following: Pt/HZSM-22; Pt/SAPO-11 (such as that described in HU 225912), Pt/Beta-zeolite, SBA/15 (Santa Barbara Amorphous), Pt/amorphous SiO₂/AlO₃, and the like, with an average pore diameter of 2-50 nm , advantageously 5-30 nm, the so-called mezopores, and have a specific surface area of at least 300 m²/g. Among these Pt/SAPO-11 described in HU 225912 has proven to be especially advantageous as being applicable successfully for the isomerization of n-paraffins with 10-26 carbon numbers. The advantageous temperature range is 300-360°C, the advantageous pressure range is 30-100 bars and the advantageous hydrocarbon load is 1.0-3.0 m³ hydrocarbon/m³ catalyst per hour, and the advantageous hydrogen to hydrocarbon ratio is 250-500 Nm³/m³.

The paraffin fractions produced by the process can be used directly or may be processed in additional steps. Processing is carried out by the methods commonly employed in oil refining, for which clarification, filtration, cleaning may be mentioned as examples.

As mentioned above, hydrocarbons with shorter carbon chains, primarily C₁-C₄ hydrocarbons are also formed in the course of cracking reactions taking place in the process. These may be utilized as fuel gas in processing units, or the C₃-C₄ fraction as auto gas. They may also be utilized as the initial feed for hydrogen production, and the hydrogen thus produced can be recycled to the process according to this invention, improving significantly the cost-effectiveness of the process.

The process is carried out generally in the commonly used equipment of oil refining, fitted with the generally employed devices and instruments. As examples of such equipment, the usual reactor vessels, heat exchangers, separators, distillation columns, pumps, compressors and gas scrubbers may be mentioned.

The composition, properties and applications of product A obtained by the process are identical with the general and advantageous composition, properties and applications indicated above at the description of product A according to this invention.

The composition, properties and applications of product B obtained by the process are identical with the general and advantageous composition, properties and applications indicated above at the description of product B.

The composition, properties and applications of product C obtained by the process are identical with the general and advantageous composition, properties and applications indicated above at the description of product C.

The composition, properties and applications of product D obtained by the process are identical with the general and advantageous composition, properties and applications indicated above at the description of product D.

As mentioned above, products A, B and D can be utilized as motor fuels by themselves or blended with standard additives. Products A, B and D can be utilized furthermore as components of motor fuel blends, advantageously as lubricity improving components. Fuels originating in any other sources, such as crude oil based gasolines or diesel oils, Fischer-Tropsch gasolines or gas oils and similar products, as well as the usual additives may be utilized as additional components in motor fuel blends. Furthermore products A, B and D may be employed for energetics purposes, e.g. as heating fuels, and chemical purposes, e.g. as raw materials for ethylene production. Product C can be utilized as lubricity improving additive in motor fuels and motor fuel blends, for example in motor fuels and motor fuel blends containing product A, B or D.

The test method used for the determination of lubricity is the lubricity test conducted with a HFRR (High-Frequency Reciprocating Rig) high frequency abrasion apparatus primarily for determining the lubricity of and diesel fuels in accordance with the specifications of MSZ ISO Standard 12156-1. A modified version of this method can also be used for characterizing the lubricity of gasolines. The test result is the size of the wear mark in µm units.

The test method used for the determination of flow properties is the CFPP (Cold Filter Plugging Point) test measuring the limit temperature of filtration in cold condition according to EN Standard 116.

This invention is presented in more detail by the following examples without limiting the scope of protection to these examples:
**Example 1:** The catalytic conversion of rape oil containing C₂₀ and C₂₂ fatty acids in 38% by weight quantity (with 10.3% by weight oxygen content) as feedstock is carried out in a pilot plant containing several reactors and fitted with the standard equipment and machinery units of industrial hydrogenating systems. Special hydrocracking according to this invention is carried out in two (2) reactors connected in series and containing a total volume of 200 cm³ sulfidized NiMoP/Al₂O₃ catalyst. Reaction conditions: 240°C first reactor inlet temperature, 325°C second reactor outlet temperature, 25-35 bars total pressure, 550 Nm³/m³ volumetric H₂ to feedstock ratio, 1.1 m³/m³ combined hourly feedstock charge rate over the two catalyst beds. The sulfur content of the feed is 800 mg/kg (with dimethyl-disulfide dosing) and the concentration of indifferent materials for controlling the reaction is 150 mg/kg diethyl-biphenyl-amine and methyl-bis-di-tert-butyl-phenol (MBDTBP) in 1:2 mass ratio. 14% of the intermediate product (not containing any unconverted triglycerides anymore) leaving the first reactor is blended with the effluent product of the second reactor. The liquid organic product stream obtained after the separation of the gaseous and aqueous phases is split into three (A, B and C) products. The respective yields are: product A - 3.2% (boiling range 38-202°C), product B - 80.6% (boiling range 216-342°C) and product C - 2.3% (bottoms). Their properties are identical with those indicated in the section describing the products according to this invention.
**Example 2:** The process according to Example 1 is repeated with the difference that a 15% portion of the volume of crude rape oil required for the experiment is mixed as a pretreatment step with adsorption clay equivalent to 0.75% of the total feed amount and the same volume of Pertfil indifferent filtration material. After mixing in cold condition, the pulp obtained is mixed to the balance (85%) of the feed not containing indirect clarification and filtration materials heated previously to 60°C temperature under 10-20 kPa vacuum. Mixing is continued for half an hour and the feedstock is strained through a press filter. The yield obtained in this way is 99.85%. Subsequently, the procedure described in Example 1 is followed with the only difference that the outlet temperature of the second reactor is 315°C. The yields of the products obtained in this way are: A - 2.4% (boiling range 54-215°C); B - 82.4% (boiling range 235-345°C); C - 1.2% (bottoms).
**Example 3:** The process according to Example 2 is repeated with the difference that the catalyst employed is not the one used for Example 1, but NiMoP/Al₂O₃ catalyst in non-sulfidized condition and without the addition of any sulfidizing agent. The inlet temperature of the first reactor is 250°C, the outlet temperature of the second reactor 345°C and the total pressure is 30-40 bars, while the other reaction conditions are unchanged. The yields of the products obtained in this way are: A - 4.7% (boiling range 32-208°C); B - 76.9% (boiling range 212-335°C); C - 4.1% (bottoms).
**Example 4:** The process according to Example 1 is repeated with the difference that 10% of the catalyst bed in the first reactor is non-pyrophoric Raney-nickel catalyst. The yields of the products obtained after catalytic conversion and separation carried out under identical conditions are: A - 2.6% (boiling range 56-215°C); B - 82.2% (boiling range 230-346°C); C - 1.1 % (bottoms).
**Example 5:** The special hydrocracking of the feed defined in Example 1 is carried out in the way and under the conditions defined in the previous examples with the difference that the total effluent stream of the first reactor is sent to the second reactor. The effluent stream from the second reactor, after the separation of the gaseous and aqueous phases and the fraction containing C₈- and lighter hydrocarbons, is sent to a reactor loaded with an isomerization catalyst where it is converted on Pt/SAPO-11 catalyst described in HU 225912 at 330-340°C temperature, 50 bars pressure with 2.0 m³/m³ hourly feedstock charge (feed rate) and 300 Nm³/m³ H₂/feed ratio. The features of product D (boiling range 180-360°C) obtained in this way are: yield - 82.5% (on feed); i/n mass ratio - 3.2:1; cetane number - 81; lubricity - 410 µm (by HFRR wear test); cold filtration limit temperature (CFPP) is -14°C. (The reason for this latter, relatively low CFPP value is that paraffins with higher molecular weight are hydrocracked at the middle of the chain to C₁₁-C₁₂ hydrocarbons in addition to the rearrangement of the skeleton structure.)
**Example 6:** The process is carried out as described in Example 1 with the difference that the total effluent stream of the first reactor is sent to the second reactor and the total pressure is set to a value of 20 bars. The liquid organic product stream obtained after the separation of the gaseous and aqueous phases is split into three (A, B and C) products with the following yields: A - 1.2% (boiling range 123-250°C); B - 84.2% (boiling range 263-336°C); C - 1.9% (bottoms).
**Example 7:** The catalytic conversion of sunflower oil (with 11% by weight oxygen content) as feedstock is carried out in a pilot plant containing several reactors and fitted with the standard equipment and machinery units of industrial hydrogenating systems. Special hydrocracking is carried out in three reactors connected in series and containing catalysts in a total volume of 4000 cm³. The first and third reactors contain sulfidized NiMo/Al₂O₃ catalyst, while the second reactor is loaded with NiMo/amorphous SiO₂-Al₂O₃ catalyst. Reaction conditions: 220°C inlet temperature and 324°C outlet temperature at the catalyst bed of the first reactor, 308°C inlet temperature and 385°C outlet temperature at the catalyst bed of the second reactor, and 321°C inlet temperature and 360°C outlet temperature at the catalyst bed of the third reactor. The internal temperature on the catalyst bed in the second reactor varied along length L due to exothermic reactors according to the temperature profile shown below:

| L (cm) | T (°C) |
|---|---|
| 0 | 308 |
| 10 | 338 |
| 20 | 369 |
| 30 | 382 |
| 40 | 385 |

The total pressure of the reactor system is 20 bars, the volumetric H₂ to feedstock ratio 600 Nm³/m³, the combined hourly feedstock charge rate over the total catalyst volume 0.5 m³/m³. The sulfur content of the feedstock is 1000 mg/kg (with dimethyl-disulfide dosing).

In the system operated under the above conditions 21% by weight of triglycerides decomposed in the first reactor with the formation of 13.6% by weight tenside-like substances (carboxylic acids, carboxylic acid esters), while 94% by weight of triglycerides decomposed in the second reactor but the intermediate products formed were also converted to final products and only 18% by weight of tenside-like substances exit from the second reactor. The adjustment of the concentration of the tenside-like substances to 2.4% by weight takes place in the third reactor. As a result, the yields of the final products leaving this reactor are: product A (boiling range 140-235°C) 4.1% and product D (boiling range 225-412°C) 78.3%.

The advantage of the process is that it enables the production of new products applicable as motor fuels and fuel blend components and additives for motor fuels and fuel blends in a more economical way and with a lower emission rate of harmful substances than similar products known to date, by a special hydrocracking technology starting from environment-friendly feedstocks and imposing less harm to the environment than similar processes known to date.

## Claims

1. A paraffin fraction consisting of 98.0-99.9% by weight C₄-C₁₂ i- and n-paraffins with 1:4 to 4:1 i/n mass ratio and 0.1-2.0% by weight C₄-C₁₀ carboxylic acid esters, wherein the boiling range of the paraffin fraction is 20-250°C.

2. The use of the product according to claim 1 in internal combustion engines as fuel and/or fuel blend component.

## Patentansprüche

1. Paraffinfraktion, welche 98,0-99,9 Gewichts% C₄-C₁₂-i- und n-Paraffine mit einem i/n-Gewichtsverhältnis von 1:4 bis 4:1 und 0,1-2,0 Gewichts% Karbonsäureester enthält, wobei der Siedepunkt der Paraffinfraktion im Bereich von 20-250°C liegt.

2. Verwendung des Produktes gemäß Anspruch 1 in Verbrennungsmotoren als Treibstoff und/oder als Komponente eines Treibstoffgemisches.

## Revendications

1. Une fraction de pétrole comprenant 98,0-99,9% en poids de i- et n-paraffines en C₄-C₁₂ avec un rapport massique i/n de 1:4 à 4:1 et 0,1-2,0% en poids d'esters d'acide carboxylique en C₄-C₁₀, où l'intervalle d'ébullition de la fraction de pétrole est de 20-250°C.

2. L'utilisation du produit selon la revendication 1 dans des moteurs à combustion interne comme carburant et/ou composant d'un mélange de carburant.
